# EUROPEAN PATENT SPECIFICATION

(11) **EP 2 319 609 B1**
(45) Date of publication and mention of the grant of the patent: **01.03.2017**
(21) Application number: 10189154.7
(22) Date of filing: 28.10.2010
(51) Int. Cl.: B01D 53/94, B01J 23/10, B01J 23/63, B01J 35/00, B01J 37/03, F01N 3/08

(54) **Exhaust gas purification catalyst**
Abgasreinigungskatalysator
Catalyseur de purification des gaz d'échappement

(30) Priority: 10.11.2009 JP 2009257280
(43) Date of publication of application: 11.05.2011
(73) Proprietor: Mazda Motor Corporation, Aki-gun, Hiroshima 730-8670 (JP)
(72) Inventor: Akamine, Masaaki, Hiroshima 730-8670 (JP); Yamada, Hiroshi, Hiroshima 730-8670 (JP); Shigetsu, Masahiko, Hiroshima 730-8670 (JP); Takami, Akihide, Hiroshima 730-8670 (JP)
(74) Representative: Zinnecker, Armin

(56) References cited:
- EP-A1- 1 810 739
- EP-A1- 1 985 354
- WO-A2-2008/000449
- US-A1- 2009 084 092

## Description

### BACKGROUND

The present disclosure relates to exhaust gas purification catalysts.

Catalysts for purification of HC (hydrocarbon), CO, and NOx (nitrogen oxides) in engine exhaust gas are required of having high purification efficiencies in the wide temperature ranges from about 200°C to about 1100°C. Thus, rare metals such as Pt, Pd, and Rh are used as catalytic metals, and are contained in catalyst layers on a support while being supported on heat-resistant oxide particles such as activated alumina, zirconium oxide, or Ce-based oxide having an oxygen storage/release capacity. However, it is known that when a catalyst is exposed to high-temperature exhaust gas, a catalytic metal gradually agglomerates to have its surface area reduced, and as a result, performance of the catalyst degrades. For this reason, a catalyst layer contains a relatively large amount of a catalytic metal in expectation of this agglomeration.

On the other hand, some attempts have been made to prevent agglomeration of a catalytic metal. For example, Japanese Patent Publications Nos. 2006-35043 and 2008-62156 propose that CeZr-based mixed oxide (composite oxide) is doped with Rh and, in addition, some Rh particles are partially exposed at the surface of this mixed oxide. This Rh-doped CeZr-based mixed oxide reduces agglomeration of Rh, and also increases the oxygen storage/release amount and the oxygen storage/release speed of the CeZr-based mixed oxide. These functions are advantageous in solving problems inherent in automobiles, i.e., Rh-doped CeZr-based mixed oxide is capable of quickly returning an atmosphere around the catalyst to a near-stoichiometric atmosphere suitable for purification of exhaust gas, even with a variation in the exhaust gas air-fuel ratio (A/F).

In addition, in exhaust gas purification catalysts, Pt or Pd principally utilizing an oxidation catalytic activity and Rh principally utilizing a reduction catalytic activity are combined together. For example, as such an exhaust gas purification catalyst, a bimetal catalyst made of a combination of two catalytic metals, i.e., a combination of Pt and Rh or a combination of Pd and Rh, and a trimetal catalyst, i.e., a combination of Pt, Pd, and Rh, are known. In Japanese Patent Publications Nos. 2006-35043 and 2008-62156 mentioned above, Pt and Pd are supported on activated alumina.

WO 2008/000449 A2 discloses a mixture of a CeZr-based mixed oxide loading Pd and Rh thereon, together with activated alumina.

EP 1 810 739 A1 discloses a CeZr-based composite oxide doped with a catalytic noble metal such as Rh and containing a rare-earth metal other than Ce forming a catalyst layer for an exhaust gas catalyst.

### SUMMARY

In Rh-doped CeZr mixed oxide powder as a catalytic component, an increase in the Ce content increases the oxygen storage/release amount but might reduce the thermal resistance, whereas an increase in the Zr content increases the thermal resistance but might reduce the oxygen storage/release amount. Precious-metal-supporting heat-resistant powder supporting Pt or Pd needs to have its purification performance enhanced in consideration of a relationship with the Rh-doped CeZr mixed oxide powder.

In view of such a requirement, the present disclosure provides a bimetal catalyst or a trimetal catalyst showing high purification performance in a long period even under situations of being exposed to high-temperature exhaust gas.

An exhaust gas purification catalyst according to the present disclosure includes a support and a catalyst layer provided on the support. In this catalyst, the catalyst layer includes Rh-doped CeZr-based mixed oxide powder in which Rh is dissolved in CeZr-based mixed oxide particles containing Ce and Zr, and also includes precious-metal-supporting heat-resistant powder in which a precious metal of at least one of Pt and Pd is supported on heat-resistant particles. The CeZr-based mixed oxide particles in which Rh is dissolved either contain at least a material selected from the group consisting of Pr, La, and Y, or are complexed with Al₂O₃, and support none of Pt and Pd. The heat-resistant particles supporting the precious metal are at least one type of particles selected from the group consisting of activated Al₂O₃ particles containing La, BaSO₄ particles, and complex particles made of CeZr-based mixed oxide and Al₂O₃.

In this exhaust gas purification catalyst, CeZr-based mixed oxide in the Rh-doped CeZr-based mixed oxide powder contains at least one of Pr, La, and Y, or is complexed with Al₂O₃, and thus, shows an enhanced oxygen storage/release capacity and a high thermal resistance. Specifically, in the case of containing at least one of Pr, La, and Y, this rare earth metal dissolved in CeZr mixed oxide can increase the thermal resistance and cause distortion of crystal of the mixed oxide, thereby enhancing the oxygen storage/release capacity. As the rare earth metal, Y is the most preferable, and is followed by La and Pr in this order. In a complex of CeZr-based mixed oxide and Al₂O₃, Al₂O₃ serves as steric hindrance, thereby reducing sintering of CeZr-based mixed oxide primary particles (i.e., reducing a decrease in the oxygen storage/release capacity). In addition, dissolving of Rh in Al₂O₃ (i.e., degradation of the oxygen storage/release capacity or catalyst performance) is also reduced.

Further, since the heat-resistant particles supporting a precious metal of at least one of Pt and Pd are at least one of La-containing activated Al₂O₃ (La-containing Al₂O₃) particles, BaSO₄ particles, and complex particles of CeZr-based mixed oxide and Al₂O₃, high catalyst performance and high thermal resistance can be obtained. In this case, as the heat-resistant particles, La-containing Al₂O₃ particles are the most preferable, and are followed by complex particles of CeZr-based mixed oxide and Al₂O₃ and BaSO₄ particles in this order. In the case of La-containing Al₂O₃ particles, these particles have high thermal resistance and a large number of pores, and thus have a large surface area. Accordingly, La-containing Al₂O₃ particles can support Pt or Pd with high dispersivity, thereby reducing sintering of Pt or Pd supported on these particles. The complex particles of CeZr-based mixed oxide and Al₂O₃ are formed by agglomeration of CeZr-based mixed oxide primary particles and Al₂O₃ primary particles. Accordingly, the Al₂O₃ primary particles can reduce sintering of CeZr-based mixed oxide primary particles, and can maintain a large specific surface area even after a long-term use. On the other hand, in the case of the BaSO₄ particles, although the BaSO₄ particles do not have a specific surface area as large as activated Al₂O₃, but do not substantially show a decrease in the specific surface area even after exposure to high-temperature exhaust gas, and thus, are very stable as a support for Pt and Pd. In addition, the poisoning with P, Zn, or S mixed into exhaust gas from engine oil (i.e., degradation of the catalyst) can be reduced.

Accordingly, the present disclosure can provide an exhaust gas purification catalyst showing high purification performance for a long period even after exposure to high-temperature exhaust gas.

In a preferred embodiment, the catalyst layer includes a layer containing the Rh-doped CeZr-based mixed oxide powder and a layer containing the precious-metal-supporting heat-resistant powder, and the layer containing the Rh-doped CeZr-based mixed oxide powder is located above the layer containing the precious-metal-supporting heat-resistant powder. Specifically, although a precious metal (i.e., Pt or Pd) in the precious-metal-supporting heat-resistant powder easily causes sintering as compared to Rh, the precious-metal-supporting heat-resistant powder is provided in the lower layer, and thus, is advantageous in reducing sintering of Pt or Pd.

In another preferred embodiment, exhaust gas purification catalyst includes, as the precious-metal-supporting heat-resistant powder, Pt-supporting heat-resistant powder in which Pt is supported on the heat-resistant particles, and Pd-supporting heat-resistant powder in which Pd is supported on the heat-resistant particles, the catalyst layer includes a layer containing the Rh-doped CeZr-based mixed oxide powder and a layer containing the Pd-supporting heat-resistant powder, the layer containing the Rh-doped CeZr-based mixed oxide powder is located above the layer containing the Pd-supporting heat-resistant powder, and the Pt-supporting heat-resistant powder is included in at least one of the layer containing the Rh-doped CeZr-based mixed oxide powder and the layer containing the Pd-supporting heat-resistant powder.

Accordingly, the three types of catalytic metals, i.e., Pt, Pd, and Rh, efficiently contribute to exhaust gas purification, thereby enhancing purification performance of the exhaust gas purification catalyst. In this case, Pt-supporting heat-resistant powder is preferably included in the layer containing the Rh-doped CeZr-based mixed oxide powder.

### BRIEF DESCRIPTION OF THE DRAWINGS

FIG. 1 is a cross-sectional view illustrating a structure of a catalyst layer of an exhaust gas purification catalyst according to a first embodiment of the present disclosure.
FIG. 2 is a cross-sectional view illustrating a structure of a catalyst layer of an exhaust gas purification catalyst according to a second embodiment of the present disclosure.

### DETAILED DESCRIPTION

Embodiments of the present disclosure will be described hereinafter with reference to the drawings. Note that the following description of the preferred embodiments is merely illustrative in nature, and is not intended to limit the scope, applications, and use of the present disclosure.

### <First Embodiment>

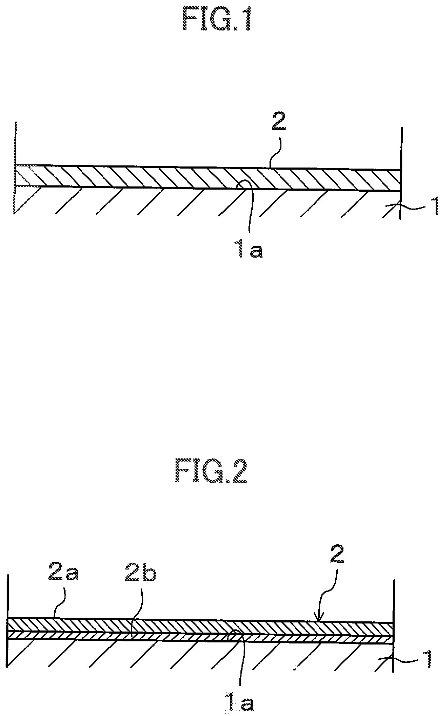

In an engine exhaust gas purification catalyst illustrated in FIG. 1, reference numeral 1 denotes a honeycomb support, and a catalyst layer 2 is formed on a cell wall surface 1a of the honeycomb support 1. This catalyst layer 2 contains a mixture of Rh-doped CeZr-based mixed oxide powder having an oxygen storage/release capacity and precious-metal-supporting heat-resistant powder.

In the Rh-doped CeZr-based mixed oxide powder, Rh is dissolved in CeZr-based mixed oxide particles containing Ce and Zr. The CeZr-based mixed oxide particles contain at least one of Pr, La, and Y, or are complexed with Al₂O₃ The CeZr-based mixed oxide particles (i.e., secondary particles) complexed with Al₂O₃ are formed by agglomeration of primary particles of CeZr-based mixed oxide and primary particles of Al₂O₃.

In the precious-metal-supporting heat-resistant powder, a precious metal of at least one of Pt and Pd is supported on heat-resistant oxide particles. Heat-resistant particles thereof are at least one of activated Al₂O₃ particles containing La (i.e., La-containing Al₂O₃), BaSO₄ particles, and complex particles of CeZr-based mixed oxide and Al₂O₃ (i.e., CeZrAl).

### [Example and Comparative Examples]

### -Rh-doped CeZr-based Mixed Oxide Powder-

As the Rh-doped CeZr-based mixed oxide powder, powders of Rh-CeZrPr in which Rh was dissolved in CeZrPr mixed oxide particles, Rh-CeZrLa in which Rh was dissolved in CeZrLa mixed oxide particles, Rh-CeZrY in which Rh was dissolved in CeZrY mixed oxide particles, and Rh-CeZrAl as a complex of Al₂O₃ and CeZr mixed oxide in which Rh was dissolved, were prepared. None of these powders contained Nd.

Each of the Rh-CeZrPr, Rh-CeZrLa, and Rh-CeZrY powders was prepared by coprecipitation. Specifically, as an example, the Rh-CeZrPr powder was prepared in the following manner. First, aqueous ammonia was added to a solution containing nitrates of Ce, Zr, Pr, and Rh with the solution being stirred, and the resultant mixture was neutralized. Then, the obtained coprecipitate was rinsed with water, was dried for one day and night at 150°C in an atmospheric environment, was pulverized, and then was calcined by being held at 500°C for two hours. In this manner, the Rh-CeZrPr powder was obtained. At least part of Rh used for doping was exposed at the surface of the mixed oxide particles. In each Rh-doped CeZr-based mixed oxide, the composition except Rh was CuO₂: ZrO₂: (Pr₂O₃ or La₂O₃ or Y₂O₃) = 45: 45 : 10 (% by mass), and the amount of Rh used for doping was 0.1% by mass.

The Rh-CeZrAl powder was prepared in the following manner. First, aqueous ammonia was added to an aluminum nitrate solution with the solution being stirred, thereby obtaining a precipitate of aluminium hydroxide as a precursor of alumina particles. Then, an aqueous ammonia solution was added to the solution from which the above precipitate was obtained. Thereafter, solutions of nitrates of Ce, Zr, and Rh were further added to, and mixed with, the solution, thereby obtaining coprecipitates of hydroxides of Ce, Zr, and Rh and the aluminium hydroxide. This mixture of precipitates was rinsed with water, was dried for one day and night at 150°C in an atmospheric environment, was pulverized, and then was calcined by being held at 500°C for two hours. In this manner, the Rh-CeZrAl powder as an agglomeration of primary particles of Rh-doped CeZr mixed oxide containing Ce and Zr, doped with Rh, and having a particle surface at which part of Rh used for doping was exposed, and primary particles of alumina, was obtained. The composition except Rh was CeO₂: ZrO₂: Al₂O₃ 25 : 25 : 50 (% by mass), and the amount of Rh used for doping was 0.1% by mass.

### -Rh-supporting CeZr-based Mixed Oxide Powder-

Powders of Rh/CeZrPr in which Rh was supported on CeZrPr mixed oxide particles by evaporation to dryness, Rh/CeZrLa in which Rh was supported on CeZrLa mixed oxide particles by evaporation to dryness, Rh/CeZrY in which Rh was supported on CeZrY mixed oxide particles by evaporation to dryness, and Rh-CeZrAl in which Rh was supported on CeZrAl mixed oxide as a complex of CeZr mixed oxide and Al₂O₃ by evaporation to dryness, were prepared.

The powders of CeZrPr mixed oxide, CeZrLa mixed oxide, CeZrY mixed oxide, and CeZrAl mixed oxide were prepared in the same manner that for the powders of Rh-CeZrPr, Rh-CeZrLa, Rh-CeZrY, and Rh-CeZrAl described above, except that Rh nitrate was not added.

The composition of each of the CeZrPr mixed oxide powder, the CeZrLa mixed oxide powder, the CeZrY mixed oxide powder, and the CeZrAl mixed oxide powder was CeO₂: ZrO₂: (Pr₂O₃, La₂O₃, or Y₂O₃) - 45 : 45 : 10 (% by mass), and the amount of Rh supported on each powder was 0.1% by mass.

### -Precious-metal-supporting Heat-resistant Powder-

As the precious-metal-supporting heat-resistant powder, La-containing Al₂O₃ supporting Pd, BaSO₄ supporting Pd, CeZrAl supporting Pd, La-containing Al₂O₃ supporting Pt, BaSO₄ supporting Pt, and CeZrAl supporting Pt, were prepared. CeZrAl was mixed oxide particles formed by agglomeration of primary particles of CeZr mixed oxide (not doped with Rh) described above, and primary particles of alumina, and had a composition of CeO₂: ZrO₂: Al₂O₃ = 25 : 25 : 50 (% by mass). La-containing Al₂O₃ contained 4%, by mass, of La₂O₃. The amount of supported Pt or Pd was adjusted such that the amount of Pt or Pd supported on the honeycomb support was 1.4 g/L when the amount of the precious-metal-supporting heat-resistant powder supported on the honeycomb support was 70 g/L.

### -No-precious-metal-supporting Heat-resistant Powder-

Powders of La-containing Al₂O₃ BaSO₄, and CeZrAl mixed oxide each of which supported no precious metal were prepared.

### -Preparation or Catalysts according to Example-

The Rh-doped CeZr-based mixed oxide powder (which is one of Rh-CeZrPr, Rh-CeZrLa, Rh-CeZrY, and Rh-CeZrAl) and the precious-metal-supporting heat-resistant powder (which is one of Pd-supporting La-containing Al₂O₃ Pd-supporting BaSO₄, Pd-supporting CeZrAl, Pt-supporting La-containing Al₂O₃, Pt-supporting BaSO₄, and Pt-supporting CeZrAl) were mixed together as appropriate, and the honeycomb support was coated with this mixture, thereby preparing various types of catalysts according to Example having different compositions of catalyst layers. With respect to the amount of a material supported on 1 L of the honeycomb support, the Rh-doped CeZr-based mixed oxide powder was 100 g/L, the precious-metal-supporting heat-resistant powder was 70 g/L, and Pd or Pt was 1.4 g/L. The coating with catalyst powder such as the Rh-doped CeZr-based mixed oxide powder was performed by adding a binder and water to the catalyst powder to change the catalyst powder into slurry (the same hereinafter).

As the honeycomb support, a support (having a volume of 25 ml) having a cell wall thickness of 3.5 mil (i.e., 8.89 × 10⁻² mm), including 600 cells per square inch (i.e., 645.16 mm²), made of cordierite, and having a cylindrical shape with a diameter of 25.4 mm and a length of 50 mm, was used. This holds true for other examples and comparative examples.

### -Preparation of Catalysts according to Comparative Example 1-

Various types of catalysts according to Comparative Example 1 having different compositions of catalyst layers were prepared in the same manner as that for the catalysts of Example, except that the Rh-doped CeZr-based mixed oxide powder was replaced by Rh-supporting CeZr-based mixed oxide powder (which is one of Rh/CeZrPr, Rh/CeZrLa, Rh/CeZrY, and Rh/CeZrAl). The amount of the supported Rh-supporting CeZr-based mixed oxide powder was 100 g/L, the amount of the supported precious-metal-supporting heat-resistant powder was 70 g/L, and amount of supported Pd or Pt was 1.4 g/L.

### -Preparation of Catalysts according to Comparative Example 2-

In Comparative Example 2, Rh-supporting CeZr-based mixed oxide powder (which is one of Rh/CeZrPr, Rh/CeZrLa, Rh/CeZrY, and Rh/CeZrAl) and no-precious-metal-supporting heat-resistant powder (which is one of La-containing Al₂O₃, BaSO₄, and CeZrAl mixed oxide) were mixed together as appropriate, and the honeycomb support was coated with this mixture. Then, this coating layer was impregnated with a Pd solution or a Pt solution, and was dried and calcined, thereby preparing various types of catalysts according to Comparative Example 2 having different compositions of the catalyst layers. The amount of the supported Rh-supporting CeZr-based mixed oxide powder was 100 g/L, and the amount of the supported no-precious-metal-supporting heat-resistant powder was 70 g/L, and the amount of Pd or Pt supported by impregnation was 1.4 g/L.

The catalysts of Comparative Example 2 differ from those of Example in that the Rh-doped CeZr-based mixed oxide powder was replaced by the Rh-supporting CeZr-based mixed oxide powder, the precious-metal-supporting heat-resistant powder was replaced by the heat-resistant powder supporting no precious metal, and a precious metal was supported by impregnation (i.e., Pd or Pt was supported by impregnation on the Rh-supporting CeZr-based mixed oxide powder and the heat-resistant powder).

### -Evaluation of Exhaust Gas Purification Performance-

The catalysts of Example and Comparative Examples were aged by keeping these catalysts at 1000°C for 24 hours in an atmospheric environment. Then, these catalysts were placed in a model gas flow reactor, and light-off temperatures T50 concerning purification of HC, CO, and NOx were measured using model gas for evaluation. The light-off temperature T50 is a gas temperature at a catalyst entrance when purification efficiency reaches 50% by gradually increasing the temperature of model gas flowing in the catalyst from room temperature. The evaluation model gas had an A/F ratio of 14.7 ± 0.9. Specifically, a mainstream gas with an A/F ratio of 14.7 was allowed to constantly flow, and a predetermined amount of gas for changing the A/F ratio was added in pulses at a rate of 1 Hz, so that the A/F ratio was forcedly oscillated within the range of ±0.9. The space velocity SV was set at 60000/h⁻¹, and the rate of temperature increase was set at 30°C/min.

Table 1 shows results of Example, Table 2 shows results of Comparative Example 1, and Table 3 shows results of Comparative Example 2. In Tables 1-3, Al2O3 means "Al₂O₃" and "BaSO4" means "BaSO₄," and the same holds for other tables.

**[Table 1]**

| First Embodiment | Rh-doped CeZr-based | Heat-resistant Powder | T50 (°C) | | | Precious Metal |
|---|---|---|---|---|---|---|
| Single-layer Structure | Mixed Oxide Powder | | HC | CO | NOx | |
| Mixture of Rh-doped CeZr-based Mixed Oxide Powder and Pd-supporting Heat-resistant Powder | Rh-CeZrPr | La-containing Al203 | 268 | 260 | 263 | Pd-supporting |
| | | BaSO4 | 293 | 284 | 289 | |
| | | CeZrAl Mixed Oxide | 281 | 272 | 274 | |
| | Rh-CeZrLa | La-containing Al2O3 | 267 | 259 | 261 | |
| | | BaSO4 | 289 | 278 | 281 | |
| | | CeZrAl Mixed Oxide | 276 | 269 | 272 | |
| | Rh-CeZrY | La-containing Al2O3 | 265 | 257 | 257 | |
| | | BaSO4 | 288 | 279 | 281 | |
| | | CeZrAl Mixed Oxide | 275 | 267 | 266 | |
| | Rh-CeZrAl | La-containing Al2O3 | 264 | 257 | 258 | |
| | | BaSO4 | 285 | 277 | 279 | |
| | | CeZrAl Mixed Oxide | 273 | 267 | 267 | |
| Mixture of Rh-supporting CeZr-based Mixed Oxide Powder and Pt-supporting Heat-resistant Particles | Rh-CeZrPr | La-containing Al2O3 | 276 | 268 | 267 | Pt-supporting |
| | | BaSO4 | 297 | 288 | 288 | |
| | | CeZrAl Mixed Oxide | 285 | 278 | 276 | |
| | Rh-CeZrLa | La-containing A1203 | 273 | 265 | 266 | |
| | | BaSO4 | 293 | 285 | 285 | |
| | | CeZrAl Mixed Oxide | 282 | 276 | 275 | |
| | Rh-CeZrY | La-containing A1203 | 272 | 265 | 265 | |
| | | BaSO4 | 293 | 285 | 286 | |
| | | CeZrAl Mixed Oxide | 282 | 276 | 276 | |
| | Rh-CeZrAl | La-containing Al2O3 | 271 | 263 | 262 | |
| | | BaSO4 | 292 | 283 | 283 | |
| | | CeZrAl Mixed Oxide | 281 | 274 | 273 | |

**[Table 2]**

| Comparative Example 1 | Rh-supporting CeZr-based | Heat-resistant Powder | T50 (°C) | | | Precious Metal |
|---|---|---|---|---|---|---|
| Single-layer Structure | Mixed Oxide Powder | | HC | CO | NOx | |
| Mixture of Rh-supporting CeZr-based Mixed Oxide Powder and Pd-supporting Heat-resistant Particles | Rh-supporting CeZrPr | La-containing A1203 | 284 | 277 | 277 | Pd-supporting |
| | | BaSO4 | 305 | 297 | 298 | |
| | | CeZrAl Mixed Oxide | 293 | 287 | 286 | |
| | Rh-supporting CeZrLa | La-containing Al2O3 | 281 | 274 | 276 | |
| | | BaSO4 | 301 | 294 | 295 | |
| | | Mixed Oxide | 290 | 285 | 285 | |
| | Rh-supporting CeZrY | La-containing Al2O3 | 280 | 274 | 275 | |
| | | BaSO4 | 301 | 294 | 296 | |
| | | CeZrAl Mixed Oxide | 290 | 285 | 286 | |
| | Rh-supporting CeZrAl | La-containing Al2O3 | 280 | 272 | 271 | |
| | | BaSO4 | 305 | 296 | 297 | |
| | | CeZrAl Mixed Oxide | 293 | 284 | 282 | |
| Mixture of Rh-supporting CeZr-based Mixed Oxide Powder and Pt-supporting Heat-resistant Particles | Rh-supporting CeZrPr | La-containing Al2O3 | 292 | 284 | 284 | Pt-supporting |
| | | BaSO4 | 312 | 304 | 303 | |
| | | CeZrAl Mixed Oxide | 301 | 295 | 293 | |
| | Rh-supporting CeZrLa | La-containing Al2O3 | 289 | 281 | 283 | |
| | | BaSO4 | 314 | 305 | 309 | |
| | | CeZrAl Mixed Oxide | 302 | 293 | 294 | |
| | Rh-supporting CeZrY | La-containing A1203 | 288 | 281 | 282 | |
| | | BaSO4 | 309 | 301 | 303 | |
| | | CeZrAl Mixed Oxide | 298 | 292 | 293 | |
| | Rh-supporting CeZrAl | La-containing Al2O3 | 286 | 280 | 277 | |
| | | BaSO4 | 306 | 300 | 296 | |
| | | CeZrAl Mixed Oxide | 295 | 291 | 286 | |

**[Table 3]**

| Comparative Example 2 | Rh-supporting CeZr-based | Heat-resistant Powder | T50 (°C) | | | Precious Metal |
|---|---|---|---|---|---|---|
| Single-layer Structure | Mixed Oxide Powder | | HC | CO | NOx | |
| Pd-impregnated Mixture Layer of Rh-supporting CeZr-based Mixed Oxide Powder and No-precious-metal-supporting Heat-resistant Powder | Rh-supporting CeZrPr | La-containing Al2O3 | 291 | 283 | 281 | Pd-impregnated |
| | | BaSO4 | 314 | 305 | 305 | |
| | | CeZrAl Mixed Oxide | 301 | 293 | 290 | |
| | Rh-supporting CeZrLa | La-containing Al2O3 | 288 | 281 | 279 | |
| | | BaSO4 | 309 | 301 | 300 | |
| | | CeZrAl Mixed Oxide | 297 | 291 | 288 | |
| | Rh-supporting CeZrY | La-containing Al2O3 | 286 | 277 | 278 | |
| | | BaSO4 | 308 | 296 | 298 | |
| | | CeZrAl Mixed Oxide | 295 | 287 | 289 | |
| | Rh-supporting CeZrAl | La-containing Al2O3 | 286 | 277 | 278 | |
| | | BaSO4 | 307 | 297 | 299 | |
| | | CeZrAl Mixed Oxide | 296 | 288 | 289 | |
| Pt-impregnated Mixture Layer of Rh-supporting CeZr-based Mixed Oxide Powder and No-precious-metal-supporting Heat-resistant Powder | Rh-supporting CeZrPr | La-containing Al2O3 | 295 | 289 | 284 | Pt-impregnated |
| | | BaSO4 | 317 | 308 | 304 | |
| | | CeZrAl Mixed Oxide | 304 | 299 | 295 | |
| | Rh-supporting CeZrLa | La-containing A1203 | 293 | 286 | 283 | |
| | | BaSO4 | 314 | 306 | 304 | |
| | | CeZrAl Mixed Oxide | 303 | 297 | 294 | |
| | Rh-supporting CeZrY | La-containing Al2O3 | 292 | 286 | 284 | |
| | | BaSO4 | 312 | 306 | 303 | |
| | | CeZrAl Mixed Oxide | 301 | 297 | 293 | |
| | Rh-supporting CeZrAl | La-containing Al2O3 | 291 | 284 | 283 | |
| | | BaSO4 | 312 | 304 | 304 | |
| | | CeZrAl Mixed Oxide | 300 | 294 | 292 | |

Tables 1 and 2 show that in purification of each of HC, CO, and NOx, if the types of CeZr-based mixed oxide powder and precious-metal-supporting heat-resistant powder are the same, the temperature T50 in the first embodiment using Rh-doped CeZr-based mixed oxide is lower than that in Comparative Example 1 using Rh-supporting CeZr-based mixed oxide. Tables 2 and 3 show that the temperature T50 in Comparative Example 1 is lower than that in Comparative Example 2 (i.e., catalysts in which a mixture layer of Rh-supporting CeZr-based mixed oxide powder and heat-resistant powder supporting no precious metal is impregnated with Pd or Pd). Accordingly, it is preferable that Pd or Pt is supported on heat-resistant powder beforehand and Pd or Pt is not supported on oxide powder supporting Rh.

Regarding the influence of the type of CeZr-based mixed oxide in the Rh-doped CeZr-based mixed oxide powder on the temperature T50 in the first embodiment (see, Table 1), the temperature T50 of Rh-CeZrAl is basically the lowest, and is followed by the those of Rh-CeZrY, Rh-CeZrLa, and Rh-CeZrPr in this order (i.e., the temperature T50 of Rh-CeZrY is the second lowest). However, with respect to purification of NOx in the case where Pd is supported on heat-resistant powder, the temperature T50 of Rh-CeZrY is exceptionally lower than that of Rh-CeZrAl.

Regarding the influence of the type of heat-resistant particles in the precious-metal-supporting heat-resistant powder, the temperature T50 in the case of using La-containing Al₂O₃ is the lowest, and is followed by those of CeZrAl and BaSO₄ in this order (i.e., the temperature T50 of CeZrAl is the second lowest). Comparison of precious metal supported on heat-resistant particles shows that the temperature T50 in the case of supporting Pd is lower than that in the case of supporting Pt.

### <Second Embodiment>

FIG. 2 illustrates a structure of a catalyst layer of an engine exhaust gas purification catalyst according to this embodiment. Unlike the catalyst layer 2 of the first embodiment, a catalyst layer 2 formed on a cell wall surface 1a of a honeycomb support 1 according to the second embodiment has a double-layer structure including an upper layer 2a containing Rh-doped CeZr-based mixed oxide powder and a lower layer 2b containing precious-metal-supporting heat-resistant powder.

### [Example]

### -Preparation of Catalysts according to Example-

Various types of catalysts according to Example having different compositions were prepared by combining various types of Rh-doped CeZr-based mixed oxide powder and precious-metal-supporting heat-resistant powder described above as appropriate. These catalysts were prepared in the same manner as in the first embodiment, except that precious-metal-supporting heat-resistant powder was first supported on the honeycomb support to form the lower layer 2b and then Rh-doped CeZr-based mixed oxide powder was supported on the honeycomb support to form the upper layer 2a. With respect to the amount of a material supported on 1 L of the honeycomb support, the Rh-doped CeZr-based mixed oxide powder was 100 g/L, the precious-metal-supporting heat-resistant powder was 70 g/L, and the amount of Pd or Pt was 1.4 g/L.

### -Evaluation of Exhaust Gas Purification Performance-

The above-described catalysts of Example were aged under the same conditions as those in the first embodiment, and light-off temperatures T50 concerning purification of HC, CO, and NOx were measured. Table 4 shows results.

**[Table 4]**

| Second Embodiment | Rh-doped CeZr-based | Heat-resistant Powder | T50 (°C) | | | Precious Metal |
|---|---|---|---|---|---|---|
| Double-layer Structure | Mixed Oxide Powder | | HC | CO | NOx | |
| Upper Layer: Rh | Rh-CeZrPr | La-containing Al2O3 | 259 | 252 | 253 | Pd-supporting |
| Lower Layer: Pd | | BaS04 | 282 | 274 | 277 | |
| | | CeZrAl Mixed Oxide | 269 | 262 | 262 | |
| | Rh-CeZrLa | La-containing A1203 | 256 | 250 | 251 | |
| | | BaS04 | 277 | 270 | 272 | |
| | | CeZrAl Mixed Oxide | 265 | 260 | 260 | |
| | Rh-CeZrY | La-containing Al2O3 | 254 | 246 | 250 | |
| | | BaSO4 | 276 | 265 | 270 | |
| | | CeZrAl Mixed Oxide | 263 | 256 | 261 | |
| | Rh-CeZrAl | La-containing Al2O3 | 253 | 247 | 248 | |
| | | BaSO4 | 273 | 267 | 267 | |
| | | CeZrAl Mixed Oxide | 262 | 258 | 257 | |
| Upper Layer: Rh | Rh-CeZrPr | La-containing Al2O3 | 266 | 258 | 259 | Pt-supporting |
| Lower Layer: Pt | | BaSO4 | 286 | 278 | 278 | |
| | | CeZrAl Mixed Oxide | 275 | 269 | 268 | |
| | Rh-CeZrLa | La-containing Al2O3 | 263 | 255 | 258 | |
| | | BaSO4 | 288 | 279 | 284 | |
| | | CeZrAl Mixed Oxide | 276 | 267 | 269 | |
| | Rh-CeZrY | La-containing A1203 | 262 | 255 | 257 | |
| | | BaSO4 | 283 | 275 | 278 | |
| | | CeZrAl Mixed Oxide | 272 | 266 | 268 | |
| | Rh-CeZrAl | La-containing Al2O3 | 261 | 253 | 254 | |
| | | BaSO4 | 282 | 273 | 275 | |
| | | CeZrAl Mixed Oxide | 270 | 263 | 263 | |

Comparison with the catalysts of Example of the first embodiment (see, Table 1) shows that in purification of each of HC, CO, and NOx, if the types of Rh-doped CeZr-based mixed oxide powder and precious-metal-supporting heat-resistant powder are the same, the temperature T50 in the second embodiment is lower than that in the first embodiment. This is considered to be because the precious-metal-supporting heat-resistant powder was provided in the lower layer 2b in the second embodiment, and thus, sintering of Pt or Pd supported on this powder was reduced by the upper layer 2a. The influence of the type of Rh-doped CeZr-based mixed oxide powder on the temperature T50, the influence of the type of CeZr-based mixed oxide powder in the Rh-doped CeZe-based mixed oxide powder on the temperature T50, the influence of the type of heat-resistant particles in the precious-metal-supporting heat-resistant powder on the temperature T50, and the influence of the type of precious metal supported on the heat-resistant particles show similar tendencies as those in the first embodiment. However, purification of CO in the case of supporting Pd on the heat-resistant powder, the temperature T50 of Rh-CeZrY is exceptionally lower than that of Rh-CeZrAl.

### <Third Embodiment>

In a third embodiment of the present disclosure, in an engine exhaust gas purification catalyst including a catalyst layer 2 with a double-layer structure as illustrated in FIG. 2, one of an upper layer and a lower layer is a mixture layer of two types of catalyst powder and the other of the upper layer and the lower layer is a single layer of a single type of catalyst powder (including a binder, however). This structure may be implemented in two ways. In a first case, the upper layer 2a is a mixture layer of Rh-doped CeZr-based mixed oxide powder and Pt-supporting heat-resistant powder, and the lower layer 2b is a single layer of Pd-supporting heat-resistant powder. In a second case, the upper layer 2a is a single layer of Rh-doped CeZr-based mixed oxide powder, and the lower layer 2b is a mixture layer of Pd-supporting heat-resistant powder and Pt-supporting heat-resistant powder.

### [Example and Comparative Example]

### -Preparation of Catalysts according to Example-

Various types of catalysts according to Example having different compositions of catalyst layers 2 were prepared by combining various types of Rh-doped CeZr-based mixed oxide powder and precious-metal-supporting heat-resistant powder described above as appropriate. These catalysts were prepared in the same manner as in the second embodiment, except that in the first case, Pd-supporting heat-resistant powder was first supported on a honeycomb support to form the lower layer 2b and then a mixture of Rh-doped CeZr-based mixed oxide powder and Pt-supporting heat-resistant powder was supported on the honeycomb support, and in the second case, a mixture of Pd-supporting heat-resistant powder and Pt-supporting powder was first supported on the honeycomb support to form the lower layer 2b and then Rh-doped CeZr-based mixed oxide powder was supported on the honeycomb support to form the upper layer 2a.

In each of the first and second cases, with respect to the amount of a material supported on 1 L of the honeycomb support, the Rh-doped CeZr-based mixed oxide powder was 100 g/L, each of the Pd-supporting heat-resistant powder and the Pt-supporting heat-resistant powder was 35 g/L (i.e., 70 g/L in total), and each of Pd and Pt was 0.7 g/L (i.e., 1.4 g/L in total).

### -Preparation of Catalysts according to Comparative Example 3-

The Rh-supporting CeZr-based mixed oxide powder and the Pd-supporting heat-resistant powder described above were combined together as appropriate, and were mixed with heat-resistant powder supporting no precious metal (i.e., the same heat-resistant powder as Pd-supporting heat-resistant powder), and a honeycomb support was coated with the resultant mixture. Then, this coating layer was impregnated with a Pt solution, and was dried and calcined, thereby preparing catalysts according to Comparative Example 3 having different compositions of catalyst layers. With respect to the amount of a material supported on 1 L of the honeycomb support, the Rh-supporting CeZr-based mixed oxide powder was 100 g/L, the Pd-supporting heat-resistant powder was 35 g/L, the no-precious-metal-supporting heat-resistant powder was 35 g/L, and each of Pd supported on heat-resistant powder and Pt supported by impregnation was 0.7 g/L (i.e., 1.4 g/L in total).

### -Evaluation of Exhaust Gas Purification Performance-

The above-described catalysts of Example and Comparative Example were aged under the same conditions as those in the first embodiment, and light-off temperatures T50 concerning purification of HC, CO, and NOx were measured. Table 5 shows results of Example, and Table 6 shows results of Comparative Example 3.

**[Table 5]**

| Third Embodiment | Rh-doped CeZr-based | Heat-resistant Powder | T50 (°C) | | | Precious Metal |
|---|---|---|---|---|---|---|
| Double-layer Structure | Mixed Oxide Powder | | HC | CO | NOx | |
| Upper Layer: Rh+Pt | Rh-CeZrPr | La-containing A1203 | 254 | 247 | 245 | Pd-supporting, Pt-supporting |
| Lower Layer: Pd (First Case) | | BaSO4 | 276 | 266 | 265 | |
| | | CeZrAl Mixed Oxide | 263 | 257 | 256 | |
| | Rh-CeZrLa | La-containing Al2O3 | 252 | 244 | 244 | |
| | | BaSO4 | 273 | 264 | 265 | |
| | | CeZrAl Mixed Oxide | 262 | 255 | 255 | |
| | Rh-CeZrY | La-containing A1203 | 251 | 244 | 245 | |
| | | BaSO4 | 271 | 264 | 264 | |
| | | CeZrAl Mixed Oxide | 260 | 255 | 254 | |
| | Rh-CeZrAl | La-containing Al2O3 | 251 | 242 | 243 | |
| | | BaSO4 | 276 | 266 | 269 | |
| | | CeZrAl Mixed Oxide | 264 | 254 | 254 | |
| Upper Layer: Rh | Rh-CeZrPr | La-containing Al2O3 | 257 | 250 | 249 | Pd-supporting, Pt-supporting |
| Lower Layer: Pd+Pt (Second Case) | | BaSO4 | 280 | 272 | 273 | |
| | | CeZrAl Mixed Oxide | 267 | 260 | 258 | |
| | Rh-CeZrLa | La-containing A1203 | 254 | 248 | 247 | |
| | | BaS04 | 275 | 268 | 268 | |
| | | CeZrAl Mixed Oxide | 263 | 258 | 256 | |
| | Rh-CeZrY | La-containing A1203 | 252 | 244 | 246 | |
| | | BaSO4 | 274 | 263 | 266 | |
| | | CeZrAl Mixed Oxide | 261 | 254 | 257 | |
| | Rh-CeZrAl | La-containing Al2O3 | 252 | 245 | 246 | |
| | | BaSO4 | 273 | 265 | 267 | |
| | | CeZrAl Mixed Oxide | 261 | 255 | 255 | |

**[Table 6]**

| Comparative Example 3 | Rh-supporting CeZr-based | Heat-resistant Powder | T50 (°C) | | | Precious Metal |
|---|---|---|---|---|---|---|
| Single-layer Structure | Mixed Oxide Powder | | HC | CO | NOx | |
| Pt-impregnated Mixture Layer of Rh-supporting CeZr-based Mixed Oxide Powder and Pd-supporting Heat-resistant particles | Rh-supporting CeZrPr | La-containing Al2O3 | 294 | 288 | 287 | Pd-supporting |
| | | BaSO4 | 317 | 310 | 311 | Pt-impregnated |
| | | CeZrAl Mixed Oxide | 304 | 298 | 296 | |
| | Rh-supporting CeZrLa | La-containing Al2O3 | 291 | 286 | 285 | |
| | | BaSO4 | 312 | 306 | 306 | |
| | | CeZrAl Mixed Oxide | 300 | 296 | 294 | |
| | Rh-supporting CeZrY | La-containing Al203 | 289 | 282 | 284 | |
| | | BaSO4 | 311 | 301 | 304 | |
| | | CeZrAl Mixed Oxide | 298 | 292 | 295 | |
| | Rh-supporting CeZrAl | La-containing Al2O3 | 288 | 283 | 282 | |
| | | BaSO4 | 308 | 303 | 301 | |
| | | CeZrAl Mixed Oxide | 297 | 294 | 291 | |

Comparison with the catalysts of Example of the second embodiment (see, Table 4) shows that in purification of each of HC, CO, and NOx, if the types of the Rh-doped CeZr-based mixed oxide powder and precious-metal-supporting heat-resistant powder are the same in a first case and a second case, the temperature T50 is lower than that in the second embodiment. This is because of the use of three types of precious metals (i.e., Rh, Pd, and Pt).

Comparison of the first case (where the upper layer is Rh + Pt, and the lower layer is Pd) and the second case (where the upper layer is Rh, and the lower layer is Pd + Pt) shows that the temperature in the first case is generally lower than that in the second case. The influence of the type of CeZr-based mixed oxide powder in the Rh-doped CeZr-based mixed oxide powder on the temperature T50 and the influence of the type of heat-resistant particles in the precious-metal-supporting heat-resistant powder on the temperature T50 show similar tendencies as those in the first embodiment. However, the temperature T50 does not significantly differ between Rh-CeZrAl and Rh-CeZrY, and thus, in some cases of using some types of heat-resistant powder, the temperature T50 in the second case is lower than the temperature T50 in the first case.

In Comparative Example 3 (see, Table 6), three types of precious metals (i.e., Rh, Pd, and Pt) were used as in the third embodiment. However, if the types of the CeZr-based mixed oxide powder and precious-metal-supporting heat-resistant powder are the same, the temperature T50 in Comparative Example 3 is lower than the temperature T50 not only in the third embodiment but also in the first embodiment.

In the first through third embodiments, precious-metal-supporting heat-resistant powder supports one of Pt and Pd as a precious metal, but may support both Pt and Pd.

In addition, Rh-CeZrAl may be a complex of Al₂O₃ and CeZr-based mixed oxide in which Rh is dissolved and which contains at least one of Pr, La, and Y.

## Claims

1. An exhaust gas purification catalyst, comprising a support (1) and a catalyst layer (2) provided on the support (1), the catalyst layer including:
a Rh-dissolved CeZr-based mixed oxide powder obtained by dissolving Rh in CeZr-based mixed oxide particles comprising Ce and Zr, and
a precious-metal-supporting heat-resistant powder in which at least one of Pt and Pd is supported on heat-resistant particles, wherein
the CeZr-based mixed oxide particles either
further comprising at least a material selected from the group consisting of Pr, La, and Y, or
are complexed with Al₂O₃,
the CeZr-based mixed oxide particles support none of Pt and Pd, and
the heat-resistant particles are at least one type of particles selected from the group consisting of:
BaSO₄ particles, and
complex particles made of CeZr-based mixed oxide and Al₂O₃.

2. The exhaust gas purification catalyst of claim 1, wherein the catalyst layer (2) includes a layer (2a) containing the Rh-dissolved CeZr-based mixed oxide powder and a layer (2b) containing the precious-metal-supporting heat-resistant powder,
the layer (2b) containing the precious-metal-supporting heat-resistant powder is located above the support (1) and
the layer (2a) containing the Rh-dissolved CeZr-based mixed oxide powder is located above the layer (2b) containing the precious-metal-supporting heat-resistant powder.

3. The exhaust gas purification catalyst of claim 1, including, as the precious-metal-supporting heat-resistant powder, Pt-supporting heat-resistant powder in which Pt is supported on the heat-resistant particles, and Pd-supporting heat-resistant powder in which Pd is supported on the heat-resistant particles,
the catalyst layer (2) includes a layer (2a) containing the Rh-dissolved CeZr-based mixed oxide powder and a layer (2b) containing the Pd-supporting heat-resistant powder,
the layer (2b) containing the precious-metal-supporting heat-resistant powder is located above the support (1),
the layer (2a) containing the Rh-dissolved CeZr-based mixed oxide powder is located above the layer (2b) containing the Pd-supporting heat-resistant powder, and
the Pt-supporting heat-resistant powder is included in at least one of the layer (2a) containing the Rh-dissolved CeZr-based mixed oxide powder and the layer (2b) containing the Pd-supporting heat-resistant powder.

## Patentansprüche

1. Abgasreinigungskatalysator, welcher einen Träger (1) und eine auf dem Träger (1) vorgesehene Katalysatorschicht (2) umfasst, wobei die Katalysatorschicht umfasst:
ein CeZr-basiertes Mischoxidpulver mit aufgelöstem Rh, das durch Auflösen von Rh in CeZr-basierten Mischoxidpartikeln, die Ce und Zr umfassen, erhalten wird, und
ein Edelmetall trägerndes wärmebeständiges Pulver, in dem mindestens eines von Pt und Pd auf wärmebeständigen Partikeln geträgert ist, wobei
die CeZr-basierten Mischoxidpartikel entweder
weiterhin mindestens ein Material gewählt aus der Gruppe bestehend aus Pr, La und Y umfassen oder
mit Al₂O₃ komplexiert sind,
die CeZr-basierten Mischoxidpartikel keines von Pt und Pd trägern und die wärmebeständigen Partikel mindestens eine Art von Partikeln gewählt aus der Gruppe bestehend aus
BaSO₄-Partikeln und
komplexen Partikeln aus CeZr-basiertem Mischoxid und Al₂O₃ sind.

2. Abgasreinigungskatalysator nach Anspruch 1, wobei
die katalytische Schicht (2) eine Schicht (2a), die das CeZr-basierte Mischoxidpulver mit aufgelöstem Rh enthält, und eine Schicht (2b), die das Edelmetall trägernde wärmebeständige Pulver enthält, umfasst,
sich die Schicht (2b), die das Edelmetall trägernde wärmebeständige Pulver enthält, oberhalb des Trägers (1) befindet und
sich die Schicht (2a), die das CeZr-basierte Mischoxidpulver mit aufgelöstem Rh enthält, oberhalb der Schicht (2b), die das Edelmetall trägernde wärmebeständige Pulver enthält, befindet.

3. Abgasreinigungskatalysator nach Anspruch 1, welcher als Edelmetall trägerndes wärmebeständiges Pulver Pt-trägerndes wärmebeständiges Pulver, in dem Pt auf den wärmebeständigen Partikeln geträgert ist, und Pd-trägerndes wärmebeständiges Pulver, in dem Pd auf den wärmebeständigen Partikeln geträgert ist, umfasst,
die katalytische Schicht (2) umfasst eine Schicht (2a), die das CeZr-basierte Mischoxidpulver mit aufgelöstem Rh enthält, und eine Schicht (2b), die das Pd-trägernde wärmebeständige Pulver enthält,
die Schicht (2b), die das Edelmetall trägernde wärmebeständige Pulver enthält, befindet sich oberhalb des Trägers (1),
die Schicht (2a), die das CeZr-basierte Mischoxidpulver mit aufgelöstem Rh enthält, befindet sich oberhalb der Schicht (2b), die das Pd- trägernde wärmebeständige Pulver enthält, und
das Pt-trägernde wärmebeständige Pulver ist in mindestens einer von: der Schicht (2a), die das CeZr-basierte Mischoxidpulver mit aufgelöstem Rh enthält, und der Schicht (2b), die das Pd-trägernde wärmebeständige Pulver enthält, enthalten.

## Revendications

1. Catalyseur de purification des gaz d'échappement, comprenant un support (1) et une couche catalytique (2) prévue sur le support (1), la couche catalytique comprenant :
une poudre d'oxyde mixte à base de CeZr et de Rh dissout, obtenue en dissolvant du Rh dans des particules d'oxyde mixte à base de CeZr comprenant du Ce et du Zr, et
une poudre réfractaire portant du métal précieux dans laquelle du Pt et/ou du Pd est porté sur des particules réfractaires, dans lequel
les particules d'oxyde mixte à base de CeZr soit
comprennent en outre au moins un matériau choisi dans le groupe constitué du Pr, du La et du Y, soit
sont combinées avec de l'Al₂O3,
les particules d'oxyde mixte à base de CeZr ne portent ni Pt ni Pd, et
les particules réfractaires sont au moins un type de particules choisi dans le groupe constitué de :
particules de BaSO₄, et
particules complexes composées d'oxyde mixte à base de CeZr et d'Al₂O₃.

2. Catalyseur de purification des gaz d'échappement selon la revendication 1, dans lequel
la couche catalytique (2) comprend une couche (2a) contenant la poudre d'oxyde mixte à base de CeZr et de Rh dissout et une couche (2b) contenant la poudre réfractaire portant du métal précieux,
la couche (2b) contenant la poudre réfractaire portant du métal précieux est située au-dessus du support (1) et
la couche (2a) contenant la poudre d'oxyde mixte à base de CeZr et de Rh dissout est située au-dessus de la couche (2b) contenant la poudre réfractaire portant du métal précieux.

3. Catalyseur de purification des gaz d'échappement selon la revendication 1, comprenant, en tant que poudre réfractaire portant du métal précieux, de la poudre réfractaire portant du Pt dans laquelle du Pt est porté sur les particules réfractaires, et de la poudre réfractaire portant du Pd dans laquelle du Pd est porté sur les particules réfractaires,
la couche catalytique (2) comprend une couche (2a) contenant la poudre d'oxyde mixte à base de CeZr et de Rh dissout et une couche (2b) contenant la poudre réfractaire portant du Pd,
la couche (2b) contenant la poudre réfractaire portant du métal précieux est située au-dessus du support (1),
la couche (2a) contenant la poudre d'oxyde mixte à base de CeZr et de Rh dissout est située au-dessus de la couche (2b) contenant la poudre réfractaire portant du Pd, et
la poudre réfractaire portant du Pt est incluse dans la couche (2a) contenant la poudre d'oxyde mixte à base de CeZr et de Rh dissout et/ou la couche (2b) contenant la poudre réfractaire portant du Pd.
